(19) Europäisches Patentamt
European Patent Office
Office européen des brevets

(11) **EP 4 361 678 A1**

(12) **EUROPEAN PATENT APPLICATION**

(43) Date of publication:
**01.05.2024 Bulletin 2024/18**

(21) Application number: **22204034.7**

(22) Date of filing: **27.10.2022**

(51) International Patent Classification (IPC):
**G01S 13/90** (2006.01)    **G01S 7/295** (2006.01)

(52) Cooperative Patent Classification (CPC):
**G01S 13/9023; G01S 7/295**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Planetek Italia S.r.l.**
**70132 Bari (IT)**

(72) Inventors:
• **SAMARELLI, Sergio**
**87036 Rende (Cosenza) (IT)**
• **MASSIMI, Vincenzo**
**65017 Penne (Pescara) (IT)**
• **BORRELLI, Raffaele**
**70010 Casamassima (Bari) (IT)**

(74) Representative: **Praxi Intellectual Property Milano**
**Via Mario Pagano, 69/A**
**20145 Milano (IT)**

(54) **SYSTEM FOR DETERMINING THE COMPONENTS OF THE DISPLACEMENT OF THE PERSISTENT SCATTERERS AND METHOD THEREOF**

(57) A system and a relative method for determining the north/south, east/west and up/down components (1) of the displacement of persistent scatterers (21) comprising an arithmetic device that is configured to execute: processing of importing displacement time series data (2) derived from multi-temporal of satellite SAR data over the persistent scatterers; processing of importing the geographical coordinates data of the persistent scatterers, information data about the persistent scatterers, orbit type data about the persistent scatterers, orbit parameters data about the persistent scatterers; calculating, for each scatterer, a total displacement value (30); grouping (9) the scatterers in a plurality of clusters based on the geographical coordinates; calculating a quantity dependent on the displacement time series for each scatterer; classifying the scatterers based on the orbit type; grouping (10) the ascending/ descending scatterers in a plurality of ascending/ descending subclusters based on the quantity value; calculating a geometrical distance between the centroid of each ascending subcluster and the centroid of each descending subcluster, thus obtaining a set of geometrical distance values for each subclusters; classifying the subclusters based on the set of geometrical distance values in isolated and coupled subcluster, depending on all values of the set of geometrical distance values are below or above a fixed threshold; identifying (11), for each coupled ascending subcluster, the descending subcluster having the minimum geometrical distance from the coupled descending subcluster, thus defining a couple of two associated subclusters; calculating, for each coupled subcluster, an average total displacement and an average incidence angle, calculating (12) the north/south, east/west and up/down components (1) of each scatterer of each subcluster using information from the subcluster of the opposite type if the subcluster is coupled.

Fig.2

**Description**

TECHNICAL FIELD OF THE INVENTION

The present invention relates to a system and a relative method, for determining the north/south, east/west and up/down components of the displacement of persistent scatterers (i.e. ground points reflecting the synthetic aperture radar (SAR) signal coherently in time), said displacement being estimated by using multi-temporal interferometry measurements of satellite SAR data.

STATE OF THE ART

In the era of remotely-sensed monitoring, the SAR (Synthetic Aperture Radar) technology has paved the way for measuring ground and infrastructures movements with millimetric accuracy. These measurements are possible thanks to the persistent scatterers (PSs). PSs correspond to single points on the ground that show high temporal phase stability in the entire data stack and are minimally affected by temporal and geometrical decorrelation, thus allowing for reliable and precise measures of distance between the point and the satellite's sensor. Every time the satellite passes on the same zone, it can acquire a new distance value allowing us to compute the potential displacement of the PS.
The major weakness of this kind of measure consists on in its ability to provide only a unidimensional information. Indeed, the sensor measures the distance variation of the PS along the Line Of Sight (LOS) of the satellite, thus providing only the projection of the PS displacement along the LOS and not the actual displacement on the ground. Clearly, in order to know the real displacement of point on the ground and, therefore, in a cartesian reference system (north/south, east/west, up/down), the unidimensional information about the distance variation along the LOS, is not enough. Indeed, if three unknown variables have to be estimated, a three-equation system has to be solved and, thus, three different measurements are needed. Considering that the satellite flies over the same zone twice, always looking to his right (or left), but once with ascending orbit and once with descending orbit, two equations can be obtained, a first equation using the displacement in ascending mode and a second equation using the displacement measured when the satellite flies following a descending orbit. The lacking of a third equation is overcome thanks to the near-polar orbits which characterize most of the satellites and allows to make the a priori assumption that the displacement in the north/ south direction is negligible.
However, even with the near-polar orbit assumption and with displacement measurements that are acquired in both ascending and descending mode, the obtained estimates of the displacement cartesian components are affected by several limitations. More particularly, in order to compute the displacement of a ground point using the measures done during the ascending and descending orbits, it is necessary, theoretically, that the two measures are spatially and temporally coincident. Obviously, this is not possible because of the time between the two overflights in ascending and descending mode (ranging from days to tens of days). However, even if the time series of ascending and descending measurements can be interpolated, so to infer the displacement values at the same time, the problem of the spatial coincidence remains unsolved. The ascending PSs almost never coincide with the descending PSs. Even considering an ascending PS and a descending PS as spatially coincident, under particular conditions (e.g. distance less than a certain value), some kind of criterion has to be chosen to decide how to pair the points when such particular conditions do not occur. To address this issue, the widely used solution in the prior art [Carla T., Tofani V., Lombardi L., Raspini F., Bianchini S., Bertolo D., Thuegaz P., Casagli N., "Combination of GNSS, satellite InSAR, and GBInSAR remote sensing monitoring to improve the understanding of a large landslide in high alpine environment", Geomorphology, Volume 335, 2019, Pages 62-75] is to use a statistical approach in which the area of interest is divided into a regular grid. First, the geometry of the grid is fixed (i.e. its position on the map and the size of the cell), and, then, the grid elements that comprise at least one descending PS and one ascending PS are identified, rejecting the other cells with the corresponding points in them. After that, for each grid element, one representative displacement value for the ascending orbit and one representative displacement value for the descending orbit are, then, obtained, by averaging the punctual displacement values over all ascending PSs and all descending PSs of the grid element, respectively. These two values will characterize a placeholder, generally called synthetic target (ST), associated with each grid element. At this point, values of deformation along the east-west and up/down components for each ST can be calculated by solving a linear system of two equations. The output of this procedure is a group of points (the STs) arranged on the intersections of the grid, but the position of these points does not have any physical meaning. As a consequence, the punctual information of each PS is lost and, to the best of our knowledge, no prior art techniques exist to recover these information. Moreover, are lost even the information relative to the PSs that belongs to grid element discarded because not containing both type of PSs (i.e. at least one ascending and one descending PS). Also in this case, to the best of our knowledge, no prior art methods are able to consider and process those PS belonging to such grid elements.

OBJECTS AND SUMMARY OF THE INVENTION

A first object of the present invention is, therefore, to provide a system for determining the cartesian components of the displacement of persistent scatterers that allows to maintaining the punctual information for each persistent scatterer.

To this aim the system of the present invention comprises an arithmetic device that is configured to execute:

- processing of importing displacement time series data (2) derived from multi-temporal of satellite SAR data over the persistent scatterers, said displacement being measured along the line of sight of the satellite and said persistent scatterers being associated with two geographical coordinates;
- processing of importing the geographical coordinates data of the persistent scatterers;
- processing of importing information data about the persistent scatterers, said information data comprising: digital elevation model, slope and aspect;
- processing of importing orbit type data about the persistent scatterers, said orbit type data being selected from the group consisting of: ascending orbit and descending orbit;
- processing of importing orbit parameters data about the persistent scatterers, said orbit parameters data comprising: an incidence angle and an azimuth angle of the line of sight of the selected scatterer;
- calculating or processing of importing a coherence value for each of the persistent scatterers;
- calculating a first quantity value for each of the persistent scatterers, said first quantity being dependent on the coherence value;
- processing of selecting the persistent scatterers having a first quantity value above a first fixed threshold, thus obtaining a set of selected scatterers;
- calculating, for each selected scatterer, a total displacement value (30) as the displacement along the line of sight during a fixed time interval;
- processing of estimating the north/ south, east/west and up/down components (1) of the selected scatterers; and
- processing of displaying information on the components (1) of the selected scatterers on an output device and or saving information on the components on a storing database.

For the purposes of the present description, the wording "digital elevation model", also known as a DEM, is a raster grids of the bare ground (bare earth) topographic surface of the Earth, referenced to the vertical datum (the surface of zero elevation to which heights are referred to) excluding trees, buildings, and any other surface objects. Each cell of the model has a value corresponding to its elevation (z-values at regularly spaced intervals). The "slope", instead, identifies the steepest downhill slope for a location on a surface. The lower the slope value, the flatter the terrain; the higher the slope value, the steeper the terrain. The slope is calculated for each cell in rasters (DEM) and it is the maximum rate of change in elevation over each cell and its eight neighbours. Finally the "aspect" identifies the downslope direction of the maximum rate of change in value from each cell to its neighbours. It can be thought of as the slope direction.

The processing of estimating of the north/ south, east/ west and up/down components of the selected scatterers comprises:

- processing of grouping the selected scatterers in a plurality of clusters based on the geographical coordinates of selected scatterers;
- calculating a second quantity dependent on the displacement time series for each selected scatterer; and for each cluster:

  • processing of classifying the selected scatterers based on the orbit type data in:

    ○ ascending scatterers, if the orbit type is ascending orbit;
    ○ descending scatterers, if the orbit type is descending orbit;

  • processing of grouping the ascending scatterers in a plurality of ascending subclusters based on the second quantity value, each of said ascending subclusters having a centroid;
  • processing of grouping the descending scatterers in a plurality of descending subclusters based on the second quantity value, each of said ascending subclusters having a centroid;
  • calculating a geometrical distance between the centroid of each ascending subcluster and the centroid of each descending subcluster, thus obtaining a set of geometrical distance values for each subclusters;
  • processing of classifying the subclusters based on the set of geometrical distance values in:

    ○ isolated subcluster, if all values of the set of geometrical distance values are below a second fixed threshold;

- ◦ coupled subclusters, if at least one value of the set of geometrical distance values are above the second fixed threshold;

- • processing of identifying, for each coupled ascending subcluster, the descending subcluster having the minimum geometrical distance from the coupled descending subcluster, thus defining a couple of two associated subclusters;
- • calculating, for each coupled subcluster, an average total displacement, as a mean of the total displacement values among the selected scatterers inside the subcluster;
- • calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
- • calculating the north/south, east/west and up/down components (1) of each selected scatterer of each coupled subcluster, based on:

  - ◦ the total displacement of the selected scatterer;
  - ◦ the aspect of the selected scatterer; and
  - ◦ the average total displacement of the subcluster that is the associated one to the subcluster to which the selected scatterer belongs; and

- • calculating the north/south, east/west and up/down components of each selected scatterer of each isolated subcluster, based on:

  - ◦ the total displacement of the selected scatterer;
  - ◦ the aspect of the selected scatterer; and
  - ◦ the slope of the selected scatterer.

Thanks to the two-steps clustering of the persistent scatterer and to the proposed coupling of ascending and descending subclusters, no a priori division of the area in regular grid is needed. In this way, the physical meaning of the points, whose cartesian components are calculated, is maintained.

A second object of the present invention is to provide a system for determining the cartesian components of the displacement of persistent scatterers that can be used even with orbit that are not near-pole.

This second object is reached by the system of the present invention described above, thanks to the use of slope and aspect together with the displacement measurements. The introduction of such parameters, allows for defining a three equation system and, thus, to calculate all the three cartesian components of the scatterers of interest.

A third object of the present invention is to provide a system for determining the cartesian components of the displacement of persistent scatterers that is able to work also with those PSs for which are not available both the ascending and descending measurements. In order to reach such an object, the system of the present invention provides a specific processing for the so-called isolated subclusters.

A further object of the present invention is, then, to provide a method for determining the cartesian components of the displacement of persistent scatterers that allows to maintaining the punctual information for each persistent scatterer.

To this aim the method of the present invention comprises:

- importing displacement time series data (2) derived from multi-temporal of satellite SAR data over the persistent scatterers, said displacement being measured along the line of sight of the satellite and said persistent scatterers being associated with two geographical coordinates;
- importing the geographical coordinates data of the persistent scatterers;
- importing information data about the persistent scatterers, said information data comprising: digital elevation model, slope and aspect (6);
- importing orbit type data about the persistent scatterers, said orbit type data being selected from the group consisting of: ascending orbit and descending orbit;
- importing orbit parameters data about the persistent scatterers, said orbit parameters data comprising: an incidence angle and an azimuth angle (8) of the line of sight of the selected scatterer;
- calculating or importing a coherence value for each of the persistent scatterers;
- calculating a first quantity value for each of the persistent scatterers, said first quantity being dependent on the coherence value;
- selecting the persistent scatterers having a first quantity value above a first fixed threshold, thus obtaining a set of selected scatterers;

- calculating, for each selected scatterers a total displacement value as the displacement along the line of sight during a fixed time interval;
- estimating the north/ south, east/west and up/down components of the selected scatterers;
- displaying information on the components of the selected scatterers on an output device and or saving information on the components on a storing database;

The step of estimating the north/south, east/west and up/down components of the selected scatterers comprises:

- grouping the selected scatterers in a plurality of clusters based on the geographical coordinates of selected scatterers;
- calculating a second quantity dependent on the displacement time series for each selected scatterer; and for each cluster:

  • classifying the selected scatterers based on the orbit type data in:

    ◦ ascending scatterers, if the orbit type is ascending orbit;
    ◦ descending scatterers, if the orbit type is descending orbit;

  • grouping the ascending scatterers in a plurality of ascending subclusters based on the second quantity value, each of said ascending subclusters having a centroid;
  • grouping the descending scatterers in a plurality of descending subclusters based on the second quantity value, each of said ascending subclusters having a centroid;
  • calculating a geometrical distance between the centroid of each ascending subcluster and the centroid of each descending subcluster, thus obtaining a set of geometrical distance values for each subclusters;
  • classifying the subclusters based on the set of geometrical distance values in:

    ◦ isolated subcluster, if all values of the set of geometrical distance values are below a second fixed threshold;
    ◦ coupled subclusters, if at least one value of the set of geometrical distance values are above the second fixed threshold;

  • identifying, for each coupled ascending subcluster, the descending subcluster having the minimum geometrical distance from the coupled ascending subcluster, thus defining a couple of two associated subclusters;
  • calculating, for each coupled subcluster, an average total displacement, as a mean of the total displacement values among the selected scatterers inside the subcluster;
  • calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
  • calculating the north/ south, east/west and up/down components of each selected scatterer of each coupled subcluster, based on:

    ◦ the total displacement of the selected scatterer;
    ◦ the aspect of the selected scatterer; and
    ◦ the average total displacement of the subcluster that is the associated one to the subcluster to which the selected scatterer belongs; and

  • calculating the north/south, east/west and up/down components of each selected scatterer of each isolated subcluster, based on:

    ◦ the total displacement of the selected scatterer;
    ◦ the aspect of the selected scatterer; and
    ◦ the slope of the selected scatterer.

These and further features of the present invention will be made clearer by the reading the following detailed description, relating to a preferred embodiments of the present invention, to be considered by way of a non-limiting example of the more general concepts claimed.

BRIEF DESCRIPTION OF THE DRAWINGS

The following description refers to the accompanying drawings, in which:

- Figure 1 is a representation of the LOS in the bidimensional north/ south-east/west reference system; and
- Figure 2 is a schematic representation of the flowchart of the method of the present invention.

DETAILED DESCRIPTION OF THE INVENTION

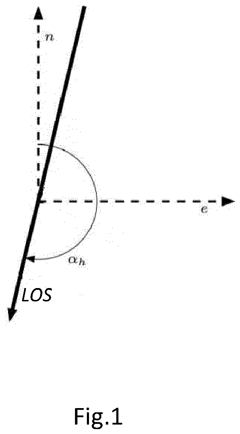

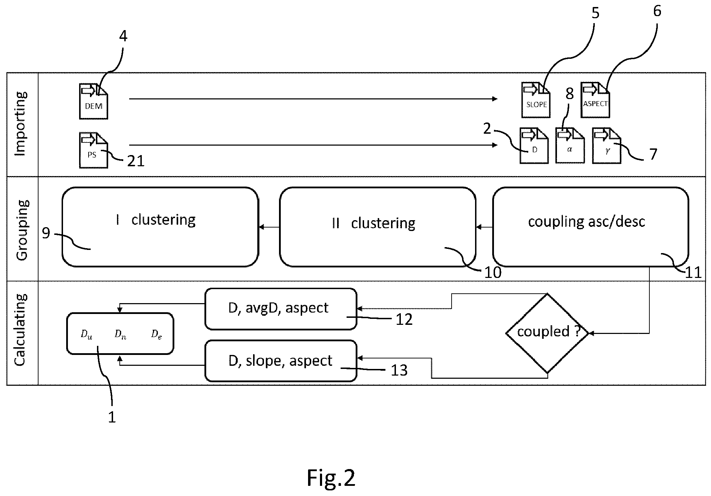

Referring to Figure 1 and 2, a preferred embodiment of the system of the present invention for determining the north/south, east/west and up/down components (1) of the displacement of persistent scatterers (21) comprises an arithmetic device that is configured to execute:

- processing of importing displacement time series data (2) derived from multi-temporal of satellite SAR data over the persistent scatterers, said displacement being measured along the line of sight of the satellite and said persistent scatterers being associated with two geographical coordinates;
- processing of importing the geographical coordinates data of the persistent scatterers;
- processing of importing information data about the persistent scatterers, said information data comprising: digital elevation model (4), slope (5) and aspect (6);
- processing of importing orbit type data about the persistent scatterers, said orbit type data being selected from the group consisting of: ascending orbit and descending orbit;
- processing of importing orbit parameters data about the persistent scatterers, said orbit parameters data comprising: an incidence angle (7) and an azimuth angle (8) of the line of sight of the selected scatterer;
- calculating or processing of importing a coherence value for each of the persistent scatterers;
- calculating a first quantity value for each of the persistent scatterers, said first quantity being dependent on the coherence value;
- processing of selecting the persistent scatterers having a first quantity value above a first fixed threshold, thus obtaining a set of selected scatterers;
- calculating, for each selected scatterer, a total displacement value (30) as the displacement along the line of sight during one year or a multiple of one;
- processing of estimating the north/ south, east/west and up/down components (1) of the selected scatterers;
- processing of displaying information on the components (1) of the selected scatterers on an output device and or saving information on the components on a storing database;

The processing of estimating the north/south, east/west and up/down components (1) of the selected scatterers comprising:

- processing grouping (9), by using a hierarchical agglomerative clustering algorithm, the selected scatterers in a plurality of clusters based on the geographical coordinates of selected scatterers;
- calculating a second quantity dependent on the displacement time series for each selected scatterer, said second quantity being the displacement time series itself or the total displacement or the average velocity; and for each cluster:

  • classifying the selected scatterers based on the orbit type data in:

    ◦ ascending scatterers, if the orbit type is ascending orbit;
    ◦ descending scatterers, if the orbit type is descending orbit;

  • grouping (10), by using a hierarchical agglomerative clustering algorithm, the ascending scatterers in a plurality of ascending subclusters based on the second quantity value, each of said ascending subclusters having a centroid;
  • grouping (10), by using a hierarchical agglomerative clustering algorithm, the descending scatterers in a plurality of descending subclusters based on the second quantity value, each of said ascending subclusters having a centroid;
  • calculating the Euclidean distance between the centroid of each ascending subcluster and the centroid of each descending subcluster, thus obtaining a set of Euclidean distance values for each subclusters;
  • classifying the subclusters based on the set of Euclidean distance values in:

    ◦ isolated subcluster, if all values of the set of Euclidean distance values are below a second fixed threshold;
    ◦ coupled subclusters, if at least one value of the set of Euclidean distance values are above the second fixed threshold;

  • identifying (11), for each coupled ascending subcluster, the descending subcluster having the minimum Euclidean distance from the coupled descending subcluster, thus defining a couple of two associated subclusters;
- calculating, for each coupled subcluster, an average total displacement, as a mean of the total displacement values among the selected scatterers inside the subcluster;
- calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
- calculating (12) the north/ south, east/west and up/down components (1) of each selected scatterer of each coupled subcluster;
- calculating (12) the north/ south, east/west and up/down components (1) of each selected scatterer of each isolated subcluster; and

The arithmetic device is further configured for calculating an uncertainty value associated with each component using a propagation error method and starting from the error associated to the total displacement of the selected scatterers. If the selected scatterer belongs to a coupled subcluster, the arithmetic device propagates two errors: the standard deviation of the total displacement of the selected scatterer to which the component refers and the standard error of the average total displacement of the subcluster that is the associated one to the subcluster to which the selected scatterer belongs. Instead, if the selected scatterer belongs to an isolated subcluster, the arithmetic device uses only the standard deviation of the total displacement of the selected scatterer to which the component refers.

The hierarchical agglomerative clustering algorithm used for grouping the selected scatterers in a plurality of clusters based on the geographical coordinates of selected scatterers and for grouping the ascending/ descending scatterers of each cluster in a plurality of ascending/ descending subclusters is based on an Euclidean metrics and, preferably, is a Ward's linkage based algorithm.

For calculating (12) the north/south, east/west and up/down components (1) of each selected scatterer of each coupled subcluster, the arithmetic device solves the following systems of equations:

$$\begin{bmatrix} D_a \\ D_d \end{bmatrix} = \begin{bmatrix} \cos\theta_{inc,a} & \sin\theta_{inc,a}\sin(\alpha_a - \gamma) \\ \cos\theta_{inc,d} & \sin\theta_{inc,d}\sin(\alpha_d - \gamma) \end{bmatrix} \begin{bmatrix} D_u \\ D_x \end{bmatrix};$$

and

$$\begin{bmatrix} D_e \\ D_n \end{bmatrix} = \begin{bmatrix} \sin\gamma \\ \cos\gamma \end{bmatrix} D_x$$

where:

- $D_a$ is the total displacement of the selected scatterer;
- $D_d$ is the average total displacement of the subcluster that is the associated subcluster of the subcluster to which the selected scatterer belongs;
- $\gamma$ is the aspect of the selected scatterer;
- $\theta_{inc,a}$ is the incidence angle of the line of sight of the selected scatterer;
- $\theta_{inc,d}$ is the average incidence angle of the subcluster that is the associated one to the subcluster to which the selected scatterer belongs;
- $\alpha_a$ is the azimuth angle of the line of sight of the selected scatterer;
- $\alpha_d$ is the average azimuth angle of the subcluster that is the associated one to the subcluster to which the selected scatterer belongs;
- $D_u$ is the up/down component;
- $D_n$ is the north/ south component; and
- $D_e$ is the east/west component.

For calculating (12) the north/south, east/west and up/down components (1) of each selected scatterer of each isolated subcluster, the arithmetic device solves the following systems of equations:

$$\begin{bmatrix} D_e \\ D_n \\ D_u \end{bmatrix} = \begin{bmatrix} \sin\beta\,\sin\gamma \\ \sin\beta\,\cos\gamma \\ -\cos\beta \end{bmatrix} D_x;$$

and

$$D_a = D_u \cos\theta_{inc,a} - \sin\theta_{inc,a}[-D_n \sin\alpha_a + D_e \cos\alpha_a]$$

where:

- $D_a$ is the total displacement of the selected scatterer;
- $\gamma$ is the aspect of the selected scatterer;
- $\beta$ is the slope of the selected scatterer;
- $\theta_{inc,a}$ is the incidence angle of the line of sight of the selected scatterer;
- $\alpha_a$ is the azimuth angle of the line of sight of the selected scatterer;
- $D_u$ is the up/down component;
- $D_n$ is the north/ south component; and
- $D_e$ is the east/west component.

Referring to Figure 1 and 2, a preferred embodiment of the method of the present invention for determining the north/south, east/west and up/down components (1) of the displacement of persistent scatterers (21) comprises:

- importing displacement time series data (2) derived from multi-temporal of satellite SAR data over the persistent scatterers, said displacement being measured along the line of sight of the satellite and said persistent scatterers being associated with two geographical coordinates;
- importing the geographical coordinates data of the persistent scatterers;
- importing information data about the persistent scatterers, said information data comprising: digital elevation model (4), slope (5) and aspect (6);
- importing orbit type data about the persistent scatterers, said orbit type data being selected from the group consisting of: ascending orbit and descending orbit;
- importing orbit parameters data about the persistent scatterers, said orbit parameters data comprising: an incidence angle (7) and an azimuth angle (8) of the line of sight of the selected scatterer;
- calculating or importing a coherence value for each of the persistent scatterers;
- calculating a first quantity value for each of the persistent scatterers, said first quantity being dependent on the coherence value;
- selecting the persistent scatterers having a first quantity value above a first fixed threshold, thus obtaining a set of selected scatterers;
- calculating, for each selected scatterer, a total displacement value (30) as the displacement along the line of sight during one year or a multiple of one;
- estimating the north/south, east/west and up/down components (1) of the selected scatterers;
- displaying information on the components (1) of the selected scatterers on an output device and or saving information on the components on a storing database;

The estimating the north/south, east/west and up/down components (1) of the selected scatterers comprising:

- grouping (9), by using a hierarchical agglomerative clustering algorithm, the selected scatterers in a plurality of clusters based on the geographical coordinates of selected scatterers;
- calculating a second quantity dependent on the displacement time series for each selected scatterer, said second quantity being the displacement time series itself or the total displacement or the average velocity; and for each cluster:

  - classifying the selected scatterers of each cluster based on the orbit type data in:

    ◦ ascending scatterers, if the orbit type is ascending orbit;
    ◦ descending scatterers, if the orbit type is descending orbit;

- grouping (10), by using a hierarchical agglomerative clustering algorithm, the ascending scatterers of each cluster in a plurality of ascending subclusters based on the second quantity value, each of said ascending subclusters having a centroid;
- grouping (10), by using a hierarchical agglomerative clustering algorithm, the descending scatterers of each cluster in a plurality of descending subclusters based on the second quantity value, each of said ascending subclusters having a centroid;
- calculating the Euclidean distance between the centroid of each ascending subcluster and the centroid of each descending subcluster, thus obtaining a set of Euclidean distance values for each subclusters;
- classifying the subclusters based on the set of Euclidean distance values in:

  ○ isolated subcluster, if all values of the set of Euclidean distance values are below a second fixed threshold;
  ○ coupled subclusters, if at least one value of the set of Euclidean distance values are above the second fixed threshold;

- identifying (11), for each coupled ascending subcluster, the descending subcluster having the minimum Euclidean distance from the coupled descending subcluster, thus defining a couple of two associated subclusters;
- calculating, for each coupled subcluster, an average total displacement, as a mean of the total displacement values among the selected scatterers inside the subcluster;
- calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
- calculating (12) the north/south, east/west and up/down components (1) of each selected scatterer of each coupled subcluster;
- calculating (12) the north/south, east/west and up/down components (1) of each selected scatterer of each isolated subcluster.

The method of the present invention can also comprises the step of calculating an uncertainty value associated with each component using a propagation error method and starting from the error associated to the total displacement of the selected scatterers. If the selected scatterer belongs to a coupled subcluster, the arithmetic device propagates two errors: the standard deviation of the total displacement of the selected scatterer to which the component refers and the standard error of the average total displacement of the subcluster that is the associated one to the subcluster to which the selected scatterer belongs. Instead, if the selected scatterer belongs to an isolated subcluster, the arithmetic device uses only the standard deviation of the total displacement of the selected scatterer to which the component refers.

The hierarchical agglomerative clustering algorithm uses for grouping the selected scatterers in a plurality of clusters based on the geographical coordinates of selected scatterers and for grouping the ascending/ descending scatterers of each cluster in a plurality of ascending/ descending subclusters is based on an Euclidean metrics and, preferably, is a Ward's linkage based algorithm.

The calculating (12) the north/ south, east/west and up/down components (1) of each selected scatterer of each coupled subcluster of each coupled subcluster solving the following systems of equations:

$$\begin{bmatrix} D_a \\ D_d \end{bmatrix} = \begin{bmatrix} \cos\theta_{inc,a} & \sin\theta_{inc,a}\sin(\alpha_a - \gamma) \\ \cos\theta_{inc,d} & \sin\theta_{inc,d}\sin(\alpha_d - \gamma) \end{bmatrix} \begin{bmatrix} D_u \\ D_x \end{bmatrix};$$

and

$$\begin{bmatrix} D_e \\ D_n \end{bmatrix} = \begin{bmatrix} \sin\gamma \\ \cos\gamma \end{bmatrix} D_x$$

where:

- $D_a$ is the total displacement of the selected scatterer;
- $D_d$ is the average total displacement of the subcluster that is the associated subcluster of the subcluster to which the selected scatterer belongs;
- $\gamma$ is the aspect of the selected scatterer;
- $\theta_{inc,a}$ is the incidence angle of the line of sight of the selected scatterer;

- $\theta_{inc,d}$ is the average incidence angle of the subcluster that is the associated one to the subcluster to which the selected scatterer belongs;
- $\alpha_a$ is the azimuth angle of the line of sight of the selected scatterer;
- $\alpha_d$ is the average azimuth angle of the subcluster that is the associated one to the subcluster to which the selected scatterer belongs;
- $D_u$ is the up/down component;
- $D_n$ is the north/ south component; and
- $D_e$ is the east/west component.

The calculating the north/south, east/west and up/down components (1) of each selected scatterer of each isolated subcluster comprises solving the following systems of equations:

$$\begin{bmatrix} D_e \\ D_n \\ D_u \end{bmatrix} = \begin{bmatrix} \sin\beta\sin\gamma \\ \sin\beta\cos\gamma \\ -\cos\beta \end{bmatrix} D_x;$$

and

$$D_a = D_u \cos\theta_{inc,a} - \sin\theta_{inc,a}[-D_n \sin\alpha_a + D_e \cos\alpha_a]$$

where:

- $D_a$ is the total displacement of the selected scatterer;
- $\gamma$ is the aspect of the selected scatterer;
- $\beta$ is the slope of the selected scatterer;
- $\theta_{inc,a}$ is the incidence angle of the line of sight of the selected scatterer;
- $\alpha_a$ is the azimuth angle of the line of sight of the selected scatterer;
- $D_u$ is the up/down component;
- $D_n$ is the north/ south component; and
- $D_e$ is the east/west component.

**Claims**

1. A system for determining the north/south, east/west and up/down components (1) of the displacement of persistent scatterers (21) comprising an arithmetic device that is configured to execute:

    - processing of importing displacement time series data (2) derived from multi-temporal of satellite SAR data over the persistent scatterers, said displacement being measured along the line of sight of the satellite and said persistent scatterers being associated with two geographical coordinates;
    - processing of importing the geographical coordinates data of the persistent scatterers;
    - processing of importing information data about the persistent scatterers, said information data comprising: digital elevation model (4), slope (5) and aspect (6);
    - processing of importing orbit type data about the persistent scatterers, said orbit type data being selected from the group consisting of: ascending orbit and descending orbit;
    - processing of importing orbit parameters data about the persistent scatterers, said orbit parameters data comprising: an incidence angle (7) and an azimuth angle (8) of the line of sight of the selected scatterer;
    - calculating or processing of importing a coherence value for each of the persistent scatterers;
    - calculating a first quantity value for each of the persistent scatterers, said first quantity being dependent on the coherence value;
    - processing of selecting the persistent scatterers having a first quantity value above a first fixed threshold, thus obtaining a set of selected scatterers;
    - calculating, for each selected scatterer, a total displacement value (30) as the displacement along the line of sight during a fixed time interval;
    - estimating the north/south, east/west and up/down components (1) of the selected scatterers;

- processing of displaying information on the components (1) of the selected scatterers on an output device and or saving information on the components on a storing database;

**characterized in that** estimating the north/south, east/west and up/down components (1) of the selected scatterers comprising:

- grouping (9) the selected scatterers in a plurality of clusters based on the geographical coordinates of selected scatterers;
- calculating a second quantity dependent on the displacement time series for each selected scatterer; and for each cluster:

• classifying the selected scatterers based on the orbit type data in:

∘ ascending scatterers, if the orbit type is ascending orbit;
∘ descending scatterers, if the orbit type is descending orbit;

• grouping (10) the ascending scatterers in a plurality of ascending subclusters based on the second quantity value, each of said ascending subclusters having a centroid;
• grouping (10) the descending scatterers in a plurality of descending subclusters based on the second quantity value, each of said ascending subclusters having a centroid;
• calculating a geometrical distance between the centroid of each ascending subcluster and the centroid of each descending subcluster, thus obtaining a set of geometrical distance values for each subclusters;
• classifying the subclusters based on the set of geometrical distance values in:

∘ isolated subcluster, if all values of the set of geometrical distance values are below a second fixed threshold;
∘ coupled subclusters, if at least one value of the set of geometrical distance values are above the second fixed threshold;

• identifying (11), for each coupled ascending subcluster, the descending subcluster having the minimum geometrical distance from the coupled descending subcluster, thus defining a couple of two associated subclusters;
• calculating, for each coupled subcluster, an average total displacement, as a mean of the total displacement values among the selected scatterers inside the subcluster;
• calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
• calculating (12) the north/ south, east/west and up/down components (1) of each selected scatterer of each coupled subcluster, based on:

∘ the total displacement of the selected scatterer
∘ the aspect of the selected scatterer; and the average total displacement of the subcluster that is the associated one to the subcluster to which the selected scatterer belongs; and

• calculating (13) the north/ south, east/west and up/down components (1) of each selected scatterer of each isolated subcluster, based on:

∘ the total displacement of the selected scatterer;
∘ the aspect of the selected scatterer; and
∘ the slope of the selected scatterer.

2. The system according to claim 1, wherein the second quantity is the displacement time series itself or the total displacement, or the average velocity.

3. The system according to any of the preceding claims, wherein the grouping (9) of the selected scatterers, the arithmetic device uses a hierarchical agglomerative clustering algorithm for processing of grouping (10) of the ascending scatterers and the grouping (10) of the descending scatterers.

4. The system according to the previous claim, wherein the clustering algorithm is based on an Euclidean metrics.

5. The system according to claim 3 or 4, wherein the clustering algorithm is a Ward's linkage based clustering algorithm.

6. The system according to any of the preceding claims, wherein the geometrical distance is an Euclidean distance.

7. The system according to any of the preceding claims, wherein the arithmetic device solves the following systems of equations, for calculating (12) the north/ south, east/west and up/down components (1) of each selected scatterer of each coupled subcluster:

$$\begin{bmatrix} D_a \\ D_d \end{bmatrix} = \begin{bmatrix} \cos\theta_{inc,a} & \sin\theta_{inc,a}\sin(\alpha_a - \gamma) \\ \cos\theta_{inc,d} & \sin\theta_{inc,d}\sin(\alpha_d - \gamma) \end{bmatrix} \begin{bmatrix} D_u \\ D_x \end{bmatrix};$$

and

$$\begin{bmatrix} D_e \\ D_n \end{bmatrix} = \begin{bmatrix} \sin\gamma \\ \cos\gamma \end{bmatrix} D_x$$

where:

- $D_a$ is the total displacement of the selected scatterer;
- $D_d$ is the average total displacement of the subcluster that is the associated subcluster of the subcluster to which the selected scatterer belongs;
- $\gamma$ is the aspect of the selected scatterer;
- $\theta_{inc,a}$ is the incidence angle of the line of sight of the selected scatterer;
- $\theta_{inc,d}$ is the average incidence angle of the subcluster that is the associated one to the subcluster to which the selected scatterer belongs;
- $\alpha_a$ is the azimuth angle of the line of sight of the selected scatterer;
- $\alpha_d$ is the average azimuth angle of the subcluster that is the associated one to the subcluster to which the selected scatterer belongs;
- $D_u$ is the up/down component;
- $D_n$ is the north/ south component; and
- $D_e$ is the east/west component.

8. The system according to any of the preceding claims, wherein the arithmetic device solves the following systems of equations, for calculating (12) the north/ south, east/west and up/down components (1) of each selected scatterer of each isolated subcluster:

$$\begin{bmatrix} D_e \\ D_n \\ D_u \end{bmatrix} = \begin{bmatrix} \sin\beta\sin\gamma \\ \sin\beta\cos\gamma \\ -\cos\beta \end{bmatrix} D_x;$$

and

$$D_a = D_u\cos\theta_{inc,a} - \sin\theta_{inc,a}[-D_n\sin\alpha_a + D_e\cos\alpha_a]$$

where:

- $D_a$ is the total displacement of the selected scatterer;
- $\gamma$ is the aspect of the selected scatterer;
- $\beta$ is the slope of the selected scatterer; $\theta_{inc,a}$ is the incidence angle of the line of sight of the selected scatterer;
- $\alpha_a$ is the azimuth angle of the line of sight of the selected scatterer;

EP 4 361 678 A1

• $D_u$ is the up/down component;
• $D_n$ is the north/ south component; and
• $D_e$ is the east/west component.

9. The system according to any of the preceding claims, wherein the arithmetic device, is configured to execute:

- calculating an uncertainty value associated with each component using a propagation error method and starting from the error associated to the total displacement of the selected scatterers.

10. The system according to the preceding claim, wherein, if the selected scatterer belongs to a coupled subcluster, the arithmetic device uses the standard deviation of the total displacement of the selected scatterer to which the component refers and the standard error of the average total displacement of the subcluster that is the associated one to the subcluster to which the selected scatterer belongs.

11. The system according to claim 9, wherein, if the selected scatterer belongs to an isolated subcluster, the arithmetic device uses the standard error of the average total displacement of the subcluster to which the selected scatterer belongs.

12. The system according to any of the preceding claim, wherein the fixed time interval is one year or a multiple of one year.

13. A method for determining the north/south, east/west and up/down components (1) of the displacement of persistent scatterers (21) comprising:

- importing displacement time series data (2) derived from multi-temporal of satellite SAR data over the persistent scatterers, said displacement being measured along the line of sight of the satellite and said persistent scatterers being associated with two geographical coordinates;
- importing the geographical coordinates data of the persistent scatterers;
- importing information data about the persistent scatterers, said information data comprising: digital elevation model (4), slope (5) and aspect (6);
- importing orbit type data about the persistent scatterers, said orbit type data being selected from the group consisting of: ascending orbit and descending orbit;
- importing orbit parameters data about the persistent scatterers, said orbit parameters data comprising: an incidence angle (7) and an azimuth angle (8) of the line of sight of the selected scatterer;
- calculating or importing a coherence value for each of the persistent scatterers;
- calculating a first quantity value for each of the persistent scatterers, said first quantity being dependent on the coherence value;
- selecting the persistent scatterers having a first quantity value above a first fixed threshold, thus obtaining a set of selected scatterers;
- calculating, for each selected scatterers a total displacement value (30) as the displacement along the line of sight during a fixed time interval;
- estimating the north/south, east/west and up/down components (1) of the selected scatterers;
- displaying information on the components (1) of the selected scatterers on an output device and or saving information on the components on a storing database;

characterized in that estimating the north/south, east/west and up/down components (1) of the selected scatterers comprising:

- grouping (9) the selected scatterers in a plurality of clusters based on the geographical coordinates of selected scatterers;
- calculating a second quantity dependent on the displacement time series for each selected scatterer; and for each cluster:

• classifying the selected scatterers based on the orbit type data in:

○ ascending scatterers, if the orbit type is ascending orbit;
○ descending scatterers, if the orbit type is descending orbit;

• grouping (10) the ascending scatterers in a plurality of ascending subclusters based on the second quantity

13

value, each of said ascending subclusters having a centroid;
• grouping (10) the descending scatterers in a plurality of descending subclusters based on the second quantity value, each of said ascending subclusters having a centroid;
• calculating a geometrical distance between the centroid of each ascending subcluster and the centroid of each descending subcluster, thus obtaining a set of geometrical distance values for each subclusters;
• classifying the subclusters based on the set of geometrical distance values in:

◦ isolated subcluster, if all values of the set of geometrical distance values are below a second fixed threshold;
◦ coupled subclusters, if at least one value of the set of geometrical distance values are above the second fixed threshold;

• identifying (11), for each coupled ascending subcluster, the descending subcluster having the minimum geometrical distance from the coupled ascending subcluster, thus defining a couple of two associated subclusters;
• calculating, for each coupled subcluster, an average total displacement, as a mean of the total displacement values among the selected scatterers inside the subcluster;
• calculating, for each coupled subcluster, an average incidence angle, as a mean of the incidence angles values among the selected scatterers inside the subcluster, and an average azimuth angle, as a mean of the azimuth angle values among the selected scatterers inside the subcluster;
• calculating (12) the north/south, east/west and up/down components (1) of each selected scatterer of each coupled subcluster, based on:

◦ the total displacement of the selected scatterer;
◦ the aspect of the selected scatterer; and
◦ the average total displacement of the subcluster that is the associated one to the subcluster to which the selected scatterer belongs; and

• calculating (13) the north/ south, east/west and up/down components (1) of each selected scatterer of each isolated subcluster, based on:

◦ the total displacement of the selected scatterer;
◦ the aspect of the selected scatterer; and
◦ the slope of the selected scatterer.

Fig.1

Fig.2

**EUROPEAN SEARCH REPORT**

Europäisches Patentamt
European Patent Office
Office européen des brevets

Application Number

EP 22 20 4034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | CARLÀ TOMMASO ET AL: "Combination of GNSS, satellite InSAR, and GBInSAR remote sensing monitoring to improve the understanding of a large landslide in high alpine environment", GEOMORPHOLOGY, vol. 335, 15 June 2019 (2019-06-15), pages 62-75, XP085660830, ISSN: 0169-555X, DOI: 10.1016/J.GEOMORPH.2019.03.014 * the whole document * ----- | 1-13 | INV. G01S13/90 G01S7/295 |
| A | CN 114 706 074 A (YAO XIN) 5 July 2022 (2022-07-05) * the whole document * ----- | 1-13 | |
| A | NICO G ET AL: "Merging GPS and Atmospherically Corrected InSAR Data to Map 3-D Terrain Displacement Velocity", IEEE TRANSACTIONS ON GEOSCIENCE AND REMOTE SENSING, IEEE, USA, vol. 49, no. 6, 1 June 2011 (2011-06-01), pages 2354-2360, XP011500163, ISSN: 0196-2892, DOI: 10.1109/TGRS.2010.2091963 * the whole document * ----- | 1-13 | |

TECHNICAL FIELDS SEARCHED (IPC)

G01S

-/--

The present search report has been drawn up for all claims

| Place of search | Date of completion of the search | Examiner |
|---|---|---|
| Munich | 14 March 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MONTAZERI SINA ET AL: "Three-Dimensional Deformation Monitoring of Urban Infrastructure by Tomographic SAR Using Multitrack TerraSAR-X Data Stacks", IEEE TRANSACTIONS ON GEOSCIENCE AND REMOTE SENSING, IEEE, USA, vol. 54, no. 12, 1 December 2016 (2016-12-01), pages 6868-6878, XP011624353, ISSN: 0196-2892, DOI: 10.1109/TGRS.2016.2585741 [retrieved on 2016-09-30] * the whole document * | 1-13 | |
| A | ALESSANDRO FERRETTI ET AL: "Submillimeter Accuracy of InSAR Time Series: Experimental Validation", IEEE TRANSACTIONS ON GEOSCIENCE AND REMOTE SENSING, IEEE, USA, vol. 45, no. 5, 1 May 2007 (2007-05-01), pages 1142-1153, XP011177290, ISSN: 0196-2892, DOI: 10.1109/TGRS.2007.894440 * sec. 5.c * | 1-13 | |
| A | CN 112 284 332 B (BEIJING SIXIANG AISHU TECH CO LTD) 8 October 2021 (2021-10-08) * the whole document * | 1-13 | |
| A | CN 110 146 883 A (UNIV EAST CHINA NORMAL) 20 August 2019 (2019-08-20) * the whole document * | 1-13 | |

TECHNICAL FIELDS SEARCHED (IPC)

-/--

The present search report has been drawn up for all claims

| Place of search | Date of completion of the search | Examiner |
|---|---|---|
| Munich | 14 March 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 22 20 4034

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIM J WRIGHT ET AL: "Toward mapping surface deformation in three dimensions using InSAR", THE 3RD EAA EUROPEAN CONGRESS ON ACOUSTICS (FORUM ACUSTICUM 2002), JOHN WILEY & SONS, INC, SEVILLA, SPAIN, vol. 31, no. 1, 14 January 2004 (2004-01-14), page n/a, XP071419910, ISSN: 0094-8276, DOI: 10.1029/2003GL018827 * the whole document * | 1-13 | |

| | | |
|---|---|---|
| | | **TECHNICAL FIELDS SEARCHED (IPC)** |

The present search report has been drawn up for all claims

| Place of search | Date of completion of the search | Examiner |
|---|---|---|
| Munich | 14 March 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 4034

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2023

| Patent document cited in search report | | Publication date | Patent family member(s) | Publication date |
|---|---|---|---|---|
| CN 114706074 | A | 05-07-2022 | NONE | |
| CN 112284332 | B | 08-10-2021 | NONE | |
| CN 110146883 | A | 20-08-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARLA T. ; TOFANI V. ; LOMBARDI L. ; RASPINI F. ; BIANCHINI S. ; BERTOLO D. ; THUEGAZ P. ; CASAGLI N.** Combination of GNSS, satellite InSAR, and GBInSAR remote sensing monitoring to improve the understanding of a large landslide in high alpine environment. *Geomorphology,* 2019, vol. 335, 62-75